# EUROPÄISCHE PATENTSCHRIFT

(11) **EP 3 295 534 B1**
(45) Veröffentlichungstag und Bekanntmachung des Hinweises auf die Patenterteilung: **01.05.2019**
(21) Anmeldenummer: 16729856.1
(22) Anmeldetag: 09.06.2016
(51) Int. Cl.: H02J 3/36, H02M 7/757, F03D 9/00, H02J 3/38, H02M 7/493

(54) **ENERGIEERZEUGUNGSANLAGE UND VERFAHREN ZU DEREN BETRIEB**
ENERGY GENERATION SYSTEM AND METHOD FOR THE OPERATION THEREOF
INSTALLATION DE PRODUCTION D'ÉNERGIE ET PROCÉDÉ DE FONCTIONNEMENT ASSOCIÉ

(30) Priorität: 06.07.2015 DE 102015212562
(43) Veröffentlichungstag der Anmeldung: 21.03.2018
(73) Patentinhaber: Siemens Aktiengesellschaft, 80333 München (DE)
(72) Erfinder: CHRIST, Timo, 91322 Gräfenberg (DE); SEMAN, Slavomir, 90574 Rosstal (DE); ZUROWSKI, Rainer, 91301 Forchheim (DE)
(86) Internationale Anmeldenummer: PCT/EP2016/063176
(87) Internationale Veröffentlichungsnummer: WO 2017/005452

(56) Entgegenhaltungen:
- EP-A1- 2 945 254
- EP-A2- 2 759 699
- WO-A1-2013/182230
- WO-A1-2015/024583
- DE-A1-102013 208 474
- ZHAOQIANG YUAN ET AL: "The Research on the VSC-HVDC Control System Structure", POWER AND ENERGY ENGINEERING CONFERENCE (APPEEC), 2012 ASIA-PACIFIC, IEEE, 27. März 2012 (2012-03-27), Seiten 1-4, XP032239792, DOI: 10.1109/APPEEC.2012.6307279 ISBN: 978-1-4577-0545-8

## Beschreibung

Die Erfindung bezieht sich auf eine Energieerzeugungsanlage mit zumindest einem Generator, der einen generatorseitigen Umrichter und einen netzseitigen Umrichter aufweist und über diese mit einem kraftwerkseitigen Wechselspannungsnetz in Verbindung steht, einem Gleichrichter, der das kraftwerkseitige Wechselspannungsnetz mit einer Gleichstromübertragungsleitung verbindet, und einem energienetzseitigen Wechselrichter, der die Gleichstromübertragungsleitung mit einem auf Wechselspannungsbasis arbeitenden Energienetz verbindet. Derartige Energieerzeugungsanlagen mit kraftwerkseitigem Wechselspannungsnetz sowie Gleichstromübertragungsleitung sind bekanntermaßen beispielsweise als Windkraftanlagen in Betrieb.

Bei herkömmlichen Energieerzeugungsanlagen wird das Problem schwankender Leistungsaufnahme durch das Energienetz dadurch gelöst, dass an die Gleichstromübertragungsleitung zuschaltbare Energieverbrauchseinrichtungen und/oder zuschaltbare Energiespeichereinrichtungen angeschlossen sind, die bei Bedarf bzw. bei fehlender Leistungsaufnahme durch das Energienetz zugeschaltet werden und somit einen zusätzlichen Energieverbrauch und/oder eine zusätzliche Energiespeicherung im Bereich der Gleichstromübertragungsleitung ermöglichen.

Aus der WO 2013/182230 A1 ist eine Anordnung zum Übertragen elektrischer Leistung von einer Fotovoltaik-Anlage in ein Versorgungsnetz bekannt. Die elektrische Leistung wird dabei mittels einer HGÜ übertragen.

Die DE 10 2013 208 474 A1 beschreibt ein Verfahren zum Einspeisen elektrischer Leistung in ein Versorgungsnetz. Dabei wird die in einem Windpark erzeugte elektrische Leistung mittels einer Wechselspannungsanbindung in das Versorgungsnetz übertragen.

Der Erfindung liegt die Aufgabe zugrunde, eine Energieerzeugungsanlage anzugeben, die im Falle von Schwankungen der Leistungsaufnahme des Energienetzes besser als herkömmliche Energieerzeugungsanlagen arbeitet.

Diese Aufgabe wird erfindungsgemäß durch eine Energieerzeugungsanlage mit den Merkmalen gemäß Patentanspruch 1 gelöst. Vorteilhafte Ausgestaltungen der erfindungsgemäßen Energieerzeugungsanlage sind in Unteransprüchen angegeben.

Danach ist erfindungsgemäß vorgesehen, dass die Energieerzeugungsanlage eine Steuereinrichtung aufweist, die derart ausgestaltet ist, dass sie die Ansteuerung des generatorseitigen Umrichters und des netzseitigen Umrichters des zumindest einen Generators zumindest auch anhand von an der Gleichstromübertragungsleitung gemessenen Gleichstrom- und/oder Gleichspannungsmesswerten vornimmt.

Ein wesentlicher Vorteil der erfindungsgemäßen Energieerzeugungsanlage ist darin zu sehen, dass durch die erfindungsgemäß vorgesehene unmittelbare Steuerung der netzseitigen Umrichter und der generatorseitigen Umrichter die Energieerzeugung durch die Generatoren und damit die Energieeinspeisung ins kraftwerkseitige Wechselspannungsnetz zeitnah nachgeregelt werden kann, so dass eine Übererzeugung von Energie durch die Generatoren und eine übermäßige Einspeisung von Energie in das kraftwerkseitige Wechselspannungsnetz vermieden wird. Auf den Einsatz zuschaltbarer Energieverbrauchseinrichtungen und/oder zuschaltbarer Energiespeichereinrichtungen, wie sie bei vorbekannten Energieerzeugungsanlagen vorhanden sind, kann somit verzichtet werden.

Bezüglich der Ausgestaltung der Steuereinrichtung wird es als vorteilhaft angesehen, wenn diese bei der Ansteuerung des generatorseitigen Umrichters und des netzseitigen Umrichters des zumindest einen Generators zusätzlich an dem Energienetz gemessene Wechselstrom- und/oder Wechselspannungsmesswerte berücksichtigt.

Bei dem Gleichrichter handelt es sich erfindungsgemäß um einen Diodenbrückengleichrichter.

Die Steuereinrichtung ist darüber hinaus bevorzugt derart ausgestaltet, dass sie anhand der an der Gleichstromübertragungsleitung gemessenen Gleichstrom- und/oder Gleichspannungsmesswerte und der an dem Energienetz gemessenen Wechselstrom- und/oder Wechselspannungsmesswerte die von dem Energienetz aufgenommene Leistung ermittelt und bei Unterschreiten eines vorgegebenen Mindestleistungswerts den generatorseitigen Umrichter und den netzseitigen Umrichter des zumindest einen Generators derart ansteuert, dass dieser weniger, insbesondere keine Leistung mehr, in das kraftwerkseitige Wechselspannungsnetz einspeist und/oder der Gleichrichter in einen nichtleitenden Zustand gebracht wird.

Mit Blick auf minimale Kosten der Energieerzeugungsanlage wird es als vorteilhaft angesehen, wenn die Gleichstromübertragungsleitung frei von zuschaltbaren Energieverbrauchseinrichtungen und/oder Energiespeichereinrichtungen ist. Wie bereits erwähnt, kann durch die Arbeitsweise der Steuereinrichtung auf Energieverbrauchseinrichtungen und/oder Energiespeichereinrichtungen im Bereich der Gleichstromübertragungsleitung verzichtet werden.

Darüber hinaus ist es vorteilhaft, wenn die Energieerzeugungsanlage eine Vielzahl an Generatoren aufweist, die jeweils mit dem kraftwerkseitigen Wechselspannungsnetz über einen eigenen generatorseitigen Umrichter und einen eigenen netzseitigen Umrichter in Verbindung stehen, und die Steuereinrichtung derart ausgestaltet ist, dass sie die Ansteuerung der generatorseitigen Umrichter und der netzseitigen Umrichter zumindest auch anhand von den an der Gleichstromübertragungsleitung gemessenen Gleichstrom- und/oder Gleichspannungsmesswerten vornimmt.

Vorzugsweise ist die Steuereinrichtung derart ausgestaltet, dass sie bei der Ansteuerung der generatorseitigen Umrichter und der netzseitigen Umrichter zusätzlich jeweils auch die an dem Energienetz gemessenen Wechselstrom- und/oder Wechselspannungsmesswerte berücksichtigt.

Bei der Energieübertragungsanlage handelt es sich vorzugsweise um eine Windkraftanlage; in diesem Fall werden die Generatoren durch Windräder gebildet.

Bezüglich der Verbindung zwischen der Steuereinrichtung und den Umrichtern der Generatoren wird es als vorteilhaft angesehen, wenn die Steuereinrichtung mit dem oder den generatorseitigen Umrichtern und dem oder den netzseitigen Umrichtern über eine oder mehrere Lichtwellenleiter in Verbindung steht und über diesen oder diese Steuersignale zur Ansteuerung des oder der generatorseitigen Umrichter und des oder der netzseitigen Umrichter überträgt.

Bezüglich der Anordnung der einzelnen Komponenten der Energieerzeugungsanlage wird es als besonders vorteilhaft angesehen, wenn der oder die Generatoren auf See positioniert sind und sich der energienetzseitige Wechselrichter an Land befindet.

Bei dem Energienetz handelt es sich vorzugsweise um ein Energieverteilnetz oder ein Energieübertragungsnetz.

Die Erfindung bezieht sich darüber hinaus auf ein Verfahren zum Betreiben einer Energieerzeugungsanlage mit zumindest einem Generator, der mit einem kraftwerkseitigen Wechselspannungsnetz über einen generatorseitigen Umrichter und einen netzseitigen Umrichter in Verbindung steht, einem Gleichrichter, der das kraftwerkseitige Wechselspannungsnetz mit einer Gleichstromübertragungsleitung verbindet, und einem energienetzseitigen Wechselrichter, der die Gleichstromübertragungsleitung mit einem auf Wechselspannungsbasis arbeitenden Energienetz verbindet.

Erfindungsgemäß ist bezüglich eines solchen Verfahrens vorgesehen, dass die Ansteuerung des generatorseitigen Umrichters und des netzseitigen Umrichters zumindest auch anhand von an der Gleichstromübertragungsleitung gemessenen Gleichstrom- und/oder Gleichspannungsmesswerten vorgenommen wird.

Bezüglich der Vorteile des erfindungsgemäßen Verfahrens sei auf die obigen Erläuterungen im Zusammenhang mit der erfindungsgemäßen Energieerzeugungsanlage verwiesen.

Die Erfindung wird nachfolgend anhand von Ausführungsbeispielen näher erläutert; dabei zeigen beispielhaft:
- Figur 1: ein Ausführungsbeispiel für eine erfindungsgemäße Energieerzeugungsanlage, anhand derer auch eine erfindungsgemäße Verfahrensvariante beispielhaft erläutert wird, und
- Figur 2: ein weiteres Ausführungsbeispiel für eine erfindungsgemäße Energieerzeugungsanlage, anhand derer eine andere erfindungsgemäße Verfahrensvariante beispielhaft beschrieben wird.

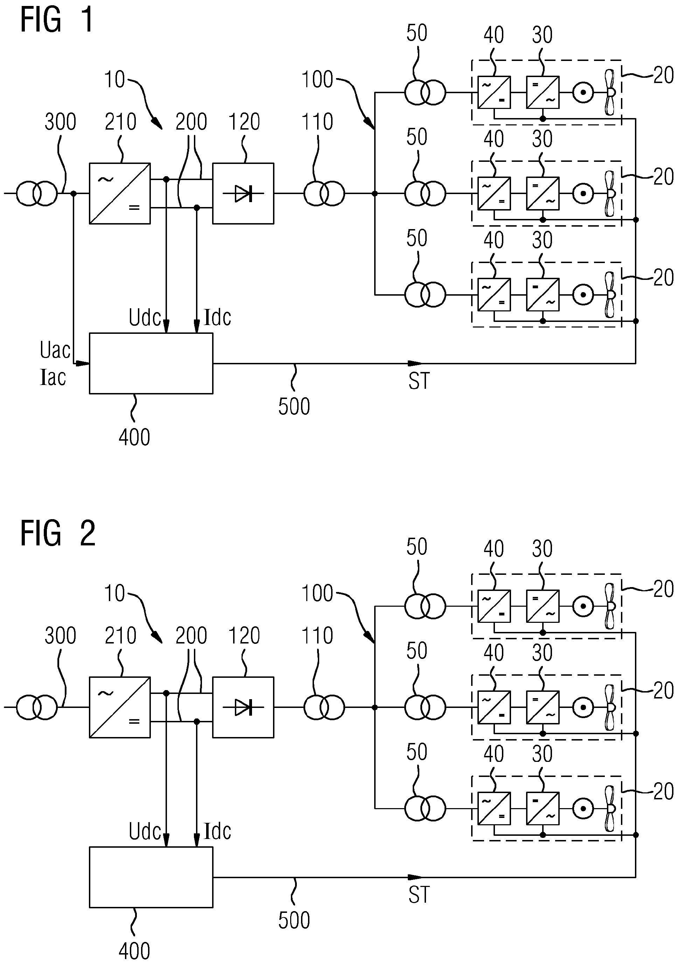

Die Figur 1 zeigt eine Energieerzeugungsanlage 10, die eine Vielzahl an Generatoren in Form von Windrädern 20 umfasst. Jedes der Windräder 20 ist jeweils mit einem generatorseitigen Umrichter 30 und einem netzseitigen Umrichter 40 ausgestattet und über diese Komponenten sowie einen Transformator 50 an ein kraftwerkseitiges Wechselspannungsnetz 100 angeschlossen.

Das kraftwerkseitige Wechselspannungsnetz 100 steht über einen Transformator 110 sowie einen Gleichrichter 120 mit einer Hochspannungs-Gleichstrom-Übertragungsleitung, nachfolgend kurz Gleichstromübertragungsleitung genannt, in Verbindung. Bei dem Gleichrichter 120 handelt es sich vorzugsweise um einen Diodenbrückengleichrichter.

Die Gleichstromübertragungsleitung 200 verbindet den Gleichrichter 120 und damit das kraftwerkseitige Wechselspannungsnetz 100 mit einem energienetzseitigen Hochspannungswechselrichter, nachfolgend kurz energienetzseitiger Wechselrichter 210 genannt, der eine Verbindung zu einem externen Energienetz 300 herstellt. Bei dem Energienetz 300 kann es sich um ein Energieverteilnetz oder ein Energieübertragungsnetz handeln. Das Energienetz 300 arbeitet vorzugsweise mit einer Spannung 220 kV, 380 kV, 500 kV, 700 kV oder 1.150 kV.

Zur Steuerung der Energieerzeugungsanlage 10 ist eine Steuereinrichtung 400 vorhanden, die über Messeinrichtungen an die Gleichstromübertragungsleitung 200 sowie das Energienetz 300 angeschlossen ist.

Über die Messeinrichtungen erhält die Steuereinrichtung 400 Gleichstrommesswerte Idc und Gleichspannungsmesswerte Udc, die den jeweiligen durch die Gleichstromübertragungsleitung 200 fließenden Gleichstrom und die an der Gleichstromübertragungsleitung 200 anliegende Gleichspannung quantitativ angeben.

Von dem Energienetz 300 erhält die Steuereinrichtung 400 Wechselspannungsmesswerte Uac sowie Wechselstrommesswerte Iac, die die Wechselspannung bzw. den Wechselstrom im Energienetz 300 und damit den Leistungsfluss in das Energienetz 300 quantitativ beschreiben.

Die Steuereinrichtung 400 ist derart ausgestaltet, dass sie die Gleichstrom- und Gleichspannungsmesswerte Idc bzw. Udc sowie die Wechselstrom- und Wechselspannungsmesswerte Iac bzw. Uac auswertet und anhand der Messwerte die Steuerung der generatorseitigen Umrichter 30 sowie der netzseitigen Umrichter 40 vornimmt.

Die Ansteuerung der generatorseitigen Umrichter 30 und der netzseitigen Umrichter 40 erfolgt bei dem Ausführungsbeispiel gemäß Figur 1 mittels Steuersignalen ST, die über eine Datenleitung 500 zu den generatorseitigen Umrichtern 30 und den netzseitigen Umrichtern 40 übertragen werden. Bei der Datenleitung 500 handelt es sich vorzugsweise um eine lichtwellenleiterbasierte Datenleitung, die eine oder mehrere Lichtwellenleiter zur Datenübertragung umfasst.

Im Rahmen der Ansteuerung der generatorseitigen Umrichter 30 und der netzseitigen Umrichter 40 wird die Steuereinrichtung 400 vorzugsweise ermitteln, welche Leistung das Energienetz 300 jeweils aktuell aufnimmt. Stellt die Steuereinrichtung 400 dabei fest, dass die von dem Energienetz 300 aufgenommene Leistung zu klein ist und die Energieproduktion der Windräder 20 zu groß ist, so wird sie die generatorseitigen Umrichter 30 und die netzseitigen Umrichter 40 derart ansteuern, dass diese weniger Leistung, insbesondere keine Leistung mehr, in das kraftwerkseitige Wechselspannungsnetz 100 einspeisen. Beispielsweise kann die Ansteuerung der Umrichter 30 und 40 derart erfolgen, dass der Gleichrichter 120 in einen nichtleitenden Zustand gebracht wird und dadurch die Gleichstromübertragungsleitung 200 von dem kraftwerkseitigen Wechselspannungsnetz 100 elektrisch getrennt wird.

Durch die unmittelbare Ansteuerung der generatorseitigen Umrichter 30 und der netzseitigen Umrichter 40 anhand von Messwerten, die sich auf das Energienetz 300 und die Gleichstromübertragungsleitung 200 beziehen, kann die Ansteuerung der Energieerzeugungsanlage 10 sehr verzögerungsarm erfolgen, so dass eine Energieüberproduktion durch die Windräder 20 vermieden werden kann. Zuschaltbare Energieverbrauchseinrichtungen und/oder zuschaltbare Energiespeichereinrichtungen, die üblicherweise sonst im Bereich des kraftwerkseitigen Wechselspannungsnetzes und/oder der Gleichstromübertragungsleitung 200 erforderlich wären, sind bei der Energieerzeugungsanlage 10 aufgrund der Arbeitsweise der Steuereinrichtung 400 somit verzichtbar.

Die Figur 2 zeigt ein weiteres Ausführungsbeispiel für eine erfindungsgemäße Energieerzeugungsanlage 10. Bei diesem Ausführungsbeispiel wertet die Steuereinrichtung 400 lediglich die Gleichstrommesswerte Idc und die Gleichspannungsmesswerte Udc, die den jeweiligen durch die Gleichstromübertragungsleitung 200 fließenden Gleichstrom und die an der Gleichstromübertragungsleitung 200 anliegende Gleichspannung angeben, aus und steuert nur anhand dieser Messwerte die generatorseitigen Umrichter 30 und die netzseitigen Umrichter 40 an.

Im Übrigen gelten die obigen Erläuterungen im Zusammenhang mit der Figur 1 für das Ausführungsbeispiel gemäß Figur 2 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Energieerzeugungsanlage
- 20: Windräder / Generatoren
- 30: generatorseitiger Umrichter
- 40: netzseitiger Umrichter
- 50: Transformator
- 100: Wechselspannungsnetz
- 110: Transformator
- 120: Gleichrichter
- 200: Gleichstromübertragungsleitung
- 210: Wechselrichter
- 300: Energienetz
- 400: Steuereinrichtung
- 500: Datenleitung

- Iac: Wechselstrommesswerte
- Idc: Gleichstrommesswerte
- ST: Steuersignale
- Uac: Wechselspannungsmesswerte
- Udc: Gleichspannungsmesswerte

## Patentansprüche

1. Energieerzeugungsanlage (10) mit
- zumindest einem Generator (20), der einen generatorseitigen Umrichter (30) und einen netzseitigen Umrichter (40) aufweist und über diese mit einem kraftwerkseitigen Wechselspannungsnetz (100) in Verbindung steht,
- einem Gleichrichter, der das kraftwerkseitige Wechselspannungsnetz (100) mit einer Gleichstromübertragungsleitung (200) verbindet, und
- einem energienetzseitigen Wechselrichter, der die Gleichstromübertragungsleitung (200) mit einem auf Wechselspannungsbasis arbeitenden Energienetz (300) verbindet,
**dadurch gekennzeichnet, dass**
die Energieerzeugungsanlage (10) eine Steuereinrichtung (400) aufweist, die derart ausgestaltet ist, dass sie die Ansteuerung des generatorseitigen Umrichters (30) und des netzseitigen Umrichters (40) des zumindest einen Generators (20) zumindest auch anhand von an der Gleichstromübertragungsleitung (200) gemessenen Gleichstrom- und/oder Gleichspannungsmesswerten (Idc, Udc) vornimmt, wobei der Gleichrichter ein Diodenbrückengleichrichter ist.

2. Energieerzeugungsanlage (10) nach Anspruch 1,
**dadurch gekennzeichnet, dass**
die Steuereinrichtung (400) derart ausgestaltet ist, dass sie bei der Ansteuerung des generatorseitigen Umrichters (30) und des netzseitigen Umrichters (40) des zumindest einen Generators (20) zusätzlich an dem Energienetz (300) gemessene Wechselstrom- und/oder Wechselspannungsmesswerte (Iac, Uac) berücksichtigt.

3. Energieerzeugungsanlage (10) nach Anspruch 2,
**dadurch gekennzeichnet, dass**
- die Steuereinrichtung (400) derart ausgestaltet ist, dass sie anhand der an der Gleichstromübertragungsleitung (200) gemessenen Gleichstrom- und/oder Gleichspannungsmesswerte (Idc, Udc) und der an dem Energienetz (300) gemessenen Wechselstrom- und/oder Wechselspannungsmesswerte (Iac, Uac) die von dem Energienetz (300) aufgenommene Leistung ermittelt und
- bei Unterschreiten eines vorgegebenen Mindestleistungswerts den generatorseitigen Umrichter (30) und den netzseitigen Umrichter (40) des zumindest einen Generators (20) derart ansteuert, dass dieser weniger, insbesondere keine Leistung mehr, in das kraftwerkseitige Wechselspannungsnetz (100) einspeist und/oder der Gleichrichter in einen nichtleitenden Zustand gebracht wird.

4. Energieerzeugungsanlage (10) nach einem der voranstehenden Ansprüche,
**dadurch gekennzeichnet, dass**
die Gleichstromübertragungsleitung (200) frei von zuschaltbaren Energieverbrauchseinrichtungen und/oder Energiespeichereinrichtungen ist.

5. Energieerzeugungsanlage (10) nach einem der voranstehenden Ansprüche,
**dadurch gekennzeichnet, dass**
- die Energieerzeugungsanlage (10) eine Vielzahl an Generatoren (20) aufweist, die jeweils mit dem kraftwerkseitigen Wechselspannungsnetz (100) über einen eigenen generatorseitigen Umrichter (30) und einen eigenen netzseitigen Umrichter (40) in Verbindung stehen, und
- die Steuereinrichtung (400) derart ausgestaltet ist, dass sie die Ansteuerung der generatorseitigen Umrichter (30) und der netzseitigen Umrichter (40) zumindest auch anhand von den an der Gleichstromübertragungsleitung (200) gemessenen Gleichstrom- und/oder Gleichspannungsmesswerten (Idc, Udc) vornimmt.

6. Energieerzeugungsanlage (10) nach Anspruch 5,
**dadurch gekennzeichnet, dass**
die Steuereinrichtung (400) derart ausgestaltet ist, dass sie bei der Ansteuerung der generatorseitigen Umrichter (30) und der netzseitigen Umrichter (40) zusätzlich jeweils auch die an dem Energienetz (300) gemessene Wechselstrom- und/oder Wechselspannungsmesswerte (Iac, Uac) berücksichtigt.

7. Energieerzeugungsanlage (10) nach einem der voranstehenden Ansprüche,
**dadurch gekennzeichnet, dass**
die Energieerzeugungsanlage (10) eine Windkraftanlage ist und die Generatoren Windräder (20) sind.

8. Energieerzeugungsanlage (10) nach einem der voranstehenden Ansprüche,
**dadurch gekennzeichnet, dass**
die Steuereinrichtung (400) mit dem oder den generatorseitigen Umrichtern (30) und dem oder den netzseitigen Umrichtern (40) über eine oder mehrere Lichtwellenleiter in Verbindung steht und über diesen oder diese Steuersignale zur Ansteuerung des oder der generatorseitigen Umrichter (30) und des oder der netzseitigen Umrichter (40) überträgt.

9. Energieerzeugungsanlage (10) nach einem der voranstehenden Ansprüche,
**dadurch gekennzeichnet, dass**
der oder die Generatoren (20) auf See positioniert sind und sich der energienetzseitige Wechselrichter an Land befindet.

10. Energieerzeugungsanlage (10) nach einem der voranstehenden Ansprüche,
**dadurch gekennzeichnet, dass**
das Energienetz (300) ein Energieübertragungsnetz ist.

11. Energieerzeugungsanlage (10) nach einem der voranstehenden Ansprüche,
**dadurch gekennzeichnet, dass**
das Energienetz (300) ein Energieverteilnetz ist.

12. Verfahren zum Betreiben einer Energieerzeugungsanlage (10) mit
- zumindest einem Generator (20), der mit einem kraftwerkseitigen Wechselspannungsnetz (100) über einen generatorseitigen Umrichter (30) und einen netzseitigen Umrichter (40) in Verbindung steht,
- einem Gleichrichter, der das kraftwerkseitige Wechselspannungsnetz (100) mit einer Gleichstromübertragungsleitung (200) verbindet, und
- einem energienetzseitigen Wechselrichter, der die Gleichstromübertragungsleitung (200) mit einem auf Wechselspannungsbasis arbeitenden Energienetz (300) verbindet,
**dadurch gekennzeichnet, dass**
die Ansteuerung des generatorseitigen Umrichters (30) und des netzseitigen Umrichters (40) zumindest auch anhand von an der Gleichstromübertragungsleitung (200) gemessenen Gleichstrom- und/oder Gleichspannungsmesswerten (Idc, Udc) vorgenommen wird, wobei als Gleichrichter ein Diodenbrückengleichrichter verwendet wird.

## Claims

1. Power generation facility (10) including
- at least one generator (20) which has a generator-side converter (30) and a network-side converter (40) and is connected via said converters to a power-plant side AC-voltage network (100),
- a rectifier which connects the power-plant side AC-voltage network (100) to a direct-current transmission line (200), and
- a power grid-side inverter which connects the direct-current transmission line (200) to a power grid (300) operating based on AC voltage,
**characterized in that**
the power generation facility (10) includes a control device (400) which is designed in such a way that it carries out the control of the generator-side converter (30) and the network-side converter (40) of the at least one generator (20) at least also based on direct-current and/or DC-voltage measurement values (Idc, Udc) which are measured on the direct-current transmission line (200), wherein the rectifier is a diode bridge rectifier.

2. Power generation facility (10) according to Claim 1,
**characterized in that**
the control device (400) is designed in such a way that it additionally takes into consideration alternating-current and/or AC-voltage measurement values (Iac, Uac) which are measured on the power grid (300), when controlling the generator-side converter (30) and the network-side converter (40) of the at least one generator (20).

3. Power generation facility (10) according to Claim 2,
**characterized in that**
- the control device (400) is designed in such a way that it ascertains the power consumed by the power grid (300), based on the direct-current and/or DC-voltage measurement values (Idc, Udc) which are measured on the direct-current transmission line (200), and the alternating-current and/or AC-voltage measurement values (Iac, Uac) which are measured on the power grid (300), and
- in the case of exceeding a predefined minimum power value, controls the generator-side converter (30) and the network-side converter (40) of the at least one generator (20) in such a way that said generator feeds less power, in particular no more power, into the power-plant side AC-voltage network (100), and/or the rectifier is brought into a non-conductive state.

4. Power generation facility (10) according to one of the preceding claims,
**characterized in that**
the direct-current transmission line (200) is free of connectable power consumption devices and/or energy storage devices.

5. The power generation facility (10) according to one of the preceding claims,
**characterized in that**
- the power generation facility (10) includes a plurality of generators (20) which are respectively connected to the power-plant side AC-voltage network (100) via a separate generator-side converter (30) and a separate network-side converter (40), and
- the control device (400) is designed in such a way that it carries out the control of the generator-side converters (30) and the network-side converters (40) at least also based on the direct-current and/or DC-voltage measurement values (Idc, Udc) which are measured on the direct-current transmission line (200).

6. Power generation facility (10) according to Claim 5,
**characterized in that**
the control device (400) is designed in such a way that in addition, it also takes into consideration the alternating-current and/or AC-voltage measurement values (Iac, Uac) which are respectively measured on the power grid (300), when controlling the generator-side converters (30) and the network-side converter (40).

7. Power generation facility (10) according to one of the preceding claims,
**characterized in that**
the power generation facility (10) is a wind power facility and the generators are wind turbines (20).

8. Power generation facility (10) according to one of the preceding claims,
**characterized in that**
the control device (400) is connected to the generator-side converter(s) (30) and the network-side converter(s) (40) via one or multiple optical waveguides, and transmits control signals via said optical waveguide(s) for controlling the generator-side converter(s) (30) and the network-side converter(s) (40).

9. Power generation facility (10) according to one of the preceding claims,
**characterized in that**
the generator (s) (20) are positioned at sea and the power grid-side inverter is located on land.

10. Power generation facility (10) according to one of the preceding claims,
**characterized in that**
the power grid (300) is a power transmission network.

11. Power generation facility (10) according to one of the preceding claims,
**characterized in that**
the power grid (300) is a power distribution network.

12. Method for operating a power generation facility (10) including
- at least one generator (20) which is connected to a power-plant side AC-voltage network (100) via a generator-side converter (30) and a network-side converter (40),
- a rectifier which connects the power-plant side AC-voltage network (100) to a direct-current transmission line (200), and
- a power grid-side inverter which connects the direct-current transmission line (200) to a power grid (300) operating based on AC voltage,
**characterized in that** the control of the generator-side converter (30) and the network-side converter (40) is carried out at least also based on direct-current and/or DC-voltage measurement values (Idc, Udc) which are measured on the direct-current transmission line (200), wherein the rectifier used is a diode bridge rectifier.

## Revendications

1. Installation (10) de production d'énergie, comprenant
- au moins une génératrice (20), qui a un convertisseur (30) du côté de la génératrice et un convertisseur (40) du côté du réseau et qui, par ceux-ci, est en liaison avec un réseau (100) à tension alternative du côté d'une centrale,
- un redresseur qui relie le réseau (100) à tension alternative du côté de la centrale à une ligne (200) de transport de courant continu et
- un onduleur du côté du réseau d'énergie, qui relie la ligne (200) de transport de courant continu à un réseau (300) d'énergie fonctionnant sur la base d'une tension alternative,
**caractérisée en ce que**
l'installation (10) de production d'énergie a un dispositif (400) de commande, conformé de manière à effectuer la commande du convertisseur (30) du côté de la génératrice et du convertisseur (40) du côté du réseau de la au moins une génératrice (20), au moins également à l'aide de valeurs (Idc, Udc) de mesure du courant continu et/ou de la tension continue, mesurées sur la ligne (200) de transport de courant continu, le redresseur étant un redresseur à pont à diode.

2. Installation (10) de production d'énergie suivant la revendication 1,
**caractérisée en ce que**
le dispositif (400) de commande est conformé de manière à prendre en compte, lors de la commande du convertisseur (30) du côté de la génératrice et du convertisseur (40) du côté du réseau de la au moins une génératrice (20), en plus, des valeurs (Iac, Uac) de mesure du courant alternatif et/ou de la tension alternative mesurées sur le réseau (300) d'énergie.

3. Installation (10) suivant la revendication 2, **caractérisée en ce que**
- le dispositif (400) de commande est conformé pour déterminer la puissance absorbée par le réseau (300) d'énergie à l'aide des valeurs (Idc, Udc) de mesure du courant continu et/ou de la tension continue mesurées sur la ligne (200) de transport de courant continu et des valeurs (Iac, Uac) de mesure du courant continu et/ou de la tension alternative mesurées sur le réseau (300) d'énergie et
- si l'on passe en dessous d'une puissance minimum donnée à l'avance, pour commander le convertisseur (30) du côté de la génératrice et le convertisseur (40) du côté du réseau de la au moins une génératrice (20), de manière à ce que celui-ci injecte moins, notamment n'injecte plus, de puissance dans le réseau (100) de tension alternative du côté de la centrale et/ou mette le redresseur dans un état non conducteur.

4. Installation (10) suivant l'une des revendications précédentes,
**caractérisée en ce que**
la ligne (200) de transport de courant continu est sans dispositif consommateur d'énergie et/ou dispositif d'accumulation d'énergie pouvant être branché.

5. Installation (10) suivant l'une des revendications précédentes,
**caractérisée en ce que**
- l'installation (10) de production d'énergie a une pluralité de génératrices (20), qui, chacune, sont en liaison avec le réseau (100) de tension alternative du côté de la centrale par leur propre convertisseur (30) du côté de la génératrice et leur propre convertisseur (40) du côté du réseau et
- le dispositif (400) de commande est conformé de manière à effectuer la commande du convertisseur (30) du côté de la génératrice et du convertisseur (40) du côté du réseau au moins également à l'aide des valeurs (Idc, Udc) de mesure du courant continu et/ou de la tension continue mesurées sur la ligne (200) de transport de courant continu.

6. Installation (10) suivant la revendication 5,
**caractérisée en ce que**
le dispositif (400) de commande est conformé de manière à prendre en compte, lors de la commande du convertisseur (30) du côté de la génératrice et du convertisseur (40) du côté du réseau, en outre, respectivement également, les valeurs (Iac, Uac) de mesure du courant alternatif et/ou de la tension alternative mesurées sur le réseau (300) d'énergie.

7. Installation (10) suivant l'une des revendications précédentes,
**caractérisée en ce que**
l'installation (10) de production d'énergie est une éolienne et les génératrices sont des roues (20) d'éolienne.

8. Installation (10) suivant l'une des revendications précédentes,
**caractérisée en ce que**
le dispositif (400) de commande est en liaison avec le ou les convertisseurs (30) du côté de la génératrice et le ou les convertisseurs (40) du côté du réseau par une ou par plusieurs fibres optiques et transmet, par celles-ci ou celle-ci, des signaux de commande du ou des convertisseurs (30) du côté de la génératrice et du ou des convertisseurs (40) du côté du réseau.

9. Installation (10) suivant l'une des revendications précédentes,
**caractérisée en ce que**
la ou les génératrices (20) sont en mer et l'onduleur du côté du réseau d'énergie se trouve sur la terre ferme.

10. Installation (10) suivant l'une des revendications précédentes,
**caractérisée en ce que**
le réseau (300) d'énergie est un réseau de transport d'énergie.

11. Installation (10) suivant l'une des revendications précédentes,
**caractérisée en ce que**
le réseau (300) d'énergie est un réseau de distribution d'énergie.

12. Procédé pour faire fonctionner une installation (10) de production d'énergie, comprenant
- au moins une génératrice (20), qui a un convertisseur (30) du côté de la génératrice et un convertisseur (40) du côté du réseau et qui, par ceux-ci, est en liaison avec un réseau (100) à tension alternative du côté d'une centrale,
- un redresseur qui relie le réseau (100) à tension alternative du côté de la centrale à une ligne (200) de transport de courant continu et
- un onduleur du côté du réseau d'énergie, qui relie la ligne (200) de transport de courant continu à un réseau (300) d'énergie fonctionnant sur la base d'une tension alternative,
**caractérisé en ce que**
l'on effectue la commande du convertisseur (30) du côté de la génératrice et du convertisseur (40) du côté du réseau, au moins également, à l'aide de valeurs (Idc, Udc) de mesure du courant continu et/ou de la tension continue mesurées sur la ligne (200) de transport de courant continu, un redresseur à pont à diode étant utilisé comme redresseur.
